(19) Europäisches Patentamt
European Patent Office
Office européen des brevets

(11) **EP 1 679 908 A1**

(12) **EUROPEAN PATENT APPLICATION**
published in accordance with Art. 158(3) EPC

(43) Date of publication:
**12.07.2006 Bulletin 2006/28**

(51) Int Cl.:
**H04N 9/73** (1985.01)

(21) Application number: **03758897.7**

(22) Date of filing: **24.10.2003**

(86) International application number:
**PCT/JP2003/013659**

(87) International publication number:
**WO 2005/041588 (06.05.2005 Gazette 2005/18)**

(84) Designated Contracting States:
**DE FI FR GB NL**

(71) Applicant: **Nokia Corporation**
**02150 Espoo (FI)**

(72) Inventors:
• **ATSUMI, Eiji**
**Kamakura-shi, Kanagawa 247-0073 (JP)**

• **FUJIWARA, Hideki**
**Matsudo-shi, Chiba 271-0071 (JP)**

(74) Representative: **TBK-Patent**
**Bavariaring 4-6**
**80336 München (DE)**

(54) **ELECTRONIC APPARATUS EQUIPPED WITH PHOTOGRAPHING FUNCTION HAVING CHROMATICNESS CORRECTING FUNCTION, AND METHOD FOR CORRECTING CHEOMATICNESS OF IMAGE DATA**

(57)    An electronic equipment has a photograph function, comprising an imaging section which converts measured light into data representing a plurality of color components and outputs the data, a white balance correcting section which corrects the white balance of the data output from the imaging section, a color information analyzing section which acquires first color information about the brightnesses of the color components contained in the data output from the imaging section and controls the degree of correction made by the white balance correcting section by use of the first color information, and a color correcting section which corrects the color of the data corrected by the white balance correcting section.

FIG.1

**Description**

BACKGROUND OF THE INVENTION

(i) Field of the Invention

This invention relates to electronic equipment having a photograph function such as a digital camera or a camera-equipped cellular phone. More specifically, it relates to correction of the color of a photograph.

(ii) Description of the Related Art

The color distribution of light in the photographing environment is not constant. For example, a large quantity of blue exists under the fine weather, and a large quantity of red exists around the time of sunset as compared with other colors. The human eyes can estimate a white object as white regardless of the color environment. However, image sensors such as a CCD sensor and a CMOS sensor are not capable of such an estimation. Accordingly, when a photographer takes a photograph of a subject that the photographer recognizes as white in the sunset, the color of the subject in the developed photograph turns out to be red, which is different from the subject's color that the photographer has recognized at the time of photographing.

For this reason, electronic equipment having a photograph function such as a digital camera or a camera-equipped cellular phone has a white balance correcting function for making a change in the color of a subject due to the color temperature of a light source close to color that a photographer sees. Correction of white balance is carried out by extracting a region assumed to be white from an output signal of an image sensor, examining the color distribution of the region and adjusting the brightness of each color so as to make the color distribution close to white.

However, it is difficult to find a proper degree of correction of white balance. When a subject considered as white is corrected to be excessively white by correction of white balance, the color of the photographing environment at the time of photographing is lost, which may become a result that does not match the photographer's intention. More specifically, when the white balance of a photograph taken in the sunset and therefore having reddish color is corrected excessively, this reddishness completely disappears, and the photograph loses an air of evening.

Under the above circumstances, it is desired to carry out such a color correction that can correct the color of a photograph to color close to that perceived by a photographer while keeping the color of the photographing environment.

A number of proposals have been made to carry out appropriate correction of white balance. For example, Japanese Patent Laid-Open Publication No. 2000-354253 describes a white balance controller capable of reproducing color close to actually viewed color by controlling gain for each pixel. Further, Japanese Patent Laid-Open Publication No. 2002-27491 describes a method capable of carrying out an accurate white balance correction while suppressing an error of white detection even when a white subject and a chromatic-color subject having color close to the characteristic of black-body radiation such as flesh color exist in the same photograph.

In electronic equipment having a photograph function, firstly, the degree of correction of white balance is set in the preparation time prior to actual photographing. To determine a more appropriate degree of correction of white balance, an advanced algorithm requiring a large amount of calculations must be executed. Meanwhile, not to lose timing for pressing the shutter, the preparation time for taking a photograph is preferably as short as possible.

However, when the processing capacity of a processing circuit for determining the degree of correction of white balance is low, the advanced algorithm may not be able to be executed in the preparation time prior to photographing.

Thus, for example, there is desired a technique for preparing a photograph which reflects the color of a subject in the color environment at the time of photographing even when the processing capacity for determining the degree of correction of white balance in the preparation time prior to the photographing is limited.

SUMMARY OF THE INVENTION

To solve the above problems, the present invention provides the following electronic equipment having a photograph function and method for correcting the color of an image data.

A first invention is electronic equipment having a photograph function, comprising:

an imaging section,
a white balance correcting section,
a color information analyzing section, and
a color correcting section,
wherein
the imaging section converts measured light into data representing a plurality of color components and outputs the data,

the white balance correcting section corrects the white balance of the data output from the imaging section,

the color information analyzing section acquires first color information about the brightnesses of the color components contained in the data output from the imaging section and controls the degree of correction made by the white balance correcting section by use of the first color information, and

the color correcting section corrects the color of the data corrected by the white balance correcting section.

In one aspect of the electronic equipment according to the first invention, the color correcting section may comprise means for adjusting the tone of each of the color components, and means for conducting a correction taking into consideration relationships with other color components on each of the color components. Further, the color correcting section may correct the color of the data corrected by the white balance correcting section by use of the first color information.

Further, in one aspect of the electronic equipment according to the first invention, the electronic equipment may further comprise:

a color specifying section,
wherein
the color specifying section allows a user to specify second color information out of a plurality of predetermined color informations, and
the color correcting section corrects the color of the data corrected by the white balance correcting section, by use of the first color information and/or the second color information.

Further, in one aspect of the electronic equipment according to the first invention, the electronic equipment may further comprise:

color recorrecting means,
wherein
the color recorrecting means further corrects the color of the data whose color has been corrected by the color correcting section, by use of the first color information and/or the second color information.

Further, in one aspect of the electronic equipment according to the first invention, the electronic equipment may further comprise:

a color interpolation processing section,
wherein
the color interpolation processing section performs color interpolation processing on the data corrected by the white balance correcting section to prepare photograph data, and
the color correcting section corrects the color of the data subjected to the color interpolation processing performed by the color interpolation processing section.

Further, in one aspect of the electronic equipment according to the first invention, the electronic equipment may further comprise:

a gamma correcting section,
wherein
the gamma correcting section performs a gamma correction on data corrected by the color adaptation correcting section.

Further, in one aspect of the electronic equipment according to the first invention, the white balance correcting section, the color adaptation correcting section and the color interpolation processing section may be implemented by ASIC. Further, the white balance correcting section, the color adaptation correcting section and the color interpolation processing section may be implemented by use of a general-purpose processor and a computer program.

Further, in one aspect of the electronic equipment according to the first invention, the electronic equipment may be portable.

In one aspect of the electronic equipment according to the first invention, the electronic equipment may be constituted as follows. More specifically, the electronic equipment may be portable electronic equipment comprising:

a camera module having a photograph function, and

a host module having a telephone function,

wherein

the camera module comprising:

an imaging section which converts measured light into data representing a plurality of color components and outputs the data,

a white balance correcting section which corrects the white balance of the data output from the imaging section,

a color information analyzing section which acquires first color information about the brightnesses of the color components contained in the data output from the imaging section and controls the degree of correction made by the white balance correcting section by use of the first color information,

a color interpolation processing section which performs color interpolation processing on the data corrected by the white balance correcting section to prepare photograph data,

a photograph data transmitting section which transmits the photograph data to the host module, and

an information data transmitting section which transmits the first color information to the host module, and

the host module comprising:

a photograph data receiving section which receives the photograph data,

an information data receiving section which receives the first color information, and

a color correcting section which corrects the color of the photograph data.

In one aspect of the electronic equipment according to the first invention, the electronic equipment may also be constituted as follows. More specifically, the electronic equipment may be portable electronic equipment comprising:

a camera module having a photograph function, and

a host module having a telephone function,

wherein

the camera module comprising:

an imaging section which converts measured light into data representing a plurality of color components and outputs the data,

a white balance correcting section which corrects the white balance of the data output from the imaging section,

a color information analyzing section which acquires first color information about the brightnesses of the color components contained in the data output from the imaging section and controls the degree of correction made by the white balance correcting section by use of the first color information,

an image data transmitting section which transmits the data corrected by the white balance correction section to the host module, and

an information data transmitting section which transmits the first color information to the host module, and

the host module comprising:

an image data receiving section which receives the data corrected by the white balance correcting section,

an information data receiving section which receives the first color information,

a color interpolation processing section which performs color interpolation processing on the data corrected by the white balance

correcting section to prepare photograph data, and

a color correcting section which corrects the color of the photograph data.

In one aspect of the electronic equipment according to the first invention, the electronic equipment may also be constituted as follows. More specifically, the electronic equipment may be portable electronic equipment comprising:

a camera module having a photograph function, and

a host module having a telephone function,

wherein

the camera module comprising:

an imaging section which converts measured light into data representing a plurality of color components and outputs the data, and

an image data transmitting section which transmits the data output from the imaging section to the host module, and

the host module comprising:

an image data receiving section which receives the data output from the imaging section,

a white balance correcting section which corrects the white balance of the received data output from the imaging section,

a color information analyzing section which acquires first color information about the brightnesses of the color components contained in the received data output from the imaging section and controls the degree of correction made by the white balance correcting section by use of the first color information,
a color interpolation processing section which performs color interpolation processing on the data corrected by the white balance correcting section to prepare photograph data, and
a color correcting section which corrects the color of the photograph data.

In the embodiment comprising the camera module and the host module as described above, the electronic equipment according to the first invention may be constituted such that the color correcting section comprises means for adjusting the tone of each of the color components and means for conducting a correction taking into consideration relationships with other color components on each of the color components. Further, the color correcting section may correct the color of the photograph data by use of the first color information.

Further, in the embodiment comprising the camera module and the host module as described above, the electronic equipment according to the first invention may be constituted such that the host module further comprises a color specifying section that allows a user to specify second color information out of a plurality of predetermined color informations, and the color correcting section corrects the color of the data corrected by the white balance correcting section, by use of the first color information and/or the second color information. Further, the host module may further comprise a recording medium for storing the photograph data, and means for retrieving the photograph data stored in the recording medium and correcting the color of the retrieved photograph data again by the color correcting section.

In the embodiment comprising the camera module and the host module as described above, the electronic equipment according to the first invention may be constituted such that the camera module further comprises a data compressing section which compresses the photograph data, and the host module further comprises a data decompressing section which decompresses the photograph data compressed by the data compressing section. Further, the white balance correcting section, the color interpolation processing section and the data compressing section may be implemented by ASIC. Further, the color correcting section, the recorrecting means and the data decompressing section may be implemented by use of a general-purpose processor and a computer program. Further, the color interpolation processing section and the color correcting section may be implemented by use of a general-purpose processor and a computer program.

A second invention is a method for correcting the color of image data output from an imaging device which outputs measured light into data representing a plurality of color components and outputs the data, the method comprising:

a step of acquiring first data by the imaging device and acquiring first color information about the brightnesses of color components contained in the first data,
a white balance correcting step of acquiring second data by the imaging device and correcting the white balance of the second data by use of the first color information, and
a color correcting step of correcting the color of the second data whose white balance has been corrected.

In one embodiment of the second invention, in the color correcting step, the tone of each of color components contained in the second data can be adjusted, and a correction taking into consideration relationships with other color components can be conducted on each of the color components.

Further, in one embodiment of the second invention, the color correcting method further comprises a step of allowing a user to specify second color information out of a plurality of predetermined color informations, and in the color correcting step, the degree of the color correction can be determined by use of the first color information and/or the second color information. Further, the second data may be subj ected to color interpolation processing prior to the color correcting step.

BRIEF DESCRIPTION OF THE DRAWINGS

Fig. 1 is a functional block diagram of camera-equipped electronic equipment according to one example of the present invention.
Fig. 2 is a functional block diagram showing a white balance correcting section and a color information analyzing section.
Fig. 3 is a functional block diagram showing a color correcting section.
Fig. 4a is a flowchart of a setting mode.
Fig. 4b is a flowchart of a photographing mode.
Fig. 5 is a functional block diagram of electronic equipment according to the present invention which comprises color recorrecting means.
Fig. 6 is a flowchart of color recorrection.

Fig. 7 is the appearance of a camera-equipped cellular phone to which the present invention is applied.

Fig. 8 is a diagram showing the hardware configuration of camera-equipped cellular phone in a first example of the present invention.

Fig. 9a is a flowchart of a setting mode.

Fig. 9b is a flowchart of a photographing mode.

Fig. 10 is a flowchart of color recorrection.

Fig. 11 is a diagram showing the hardware configuration of camera-equipped cellular phone in a second example of the present invention.

Fig. 12 is a diagram showing the hardware configuration of camera-equipped cellular phone in a third example of the present invention.

DETAILED DESCRIPTION OF THE PREFERRED EMBODIMENTS

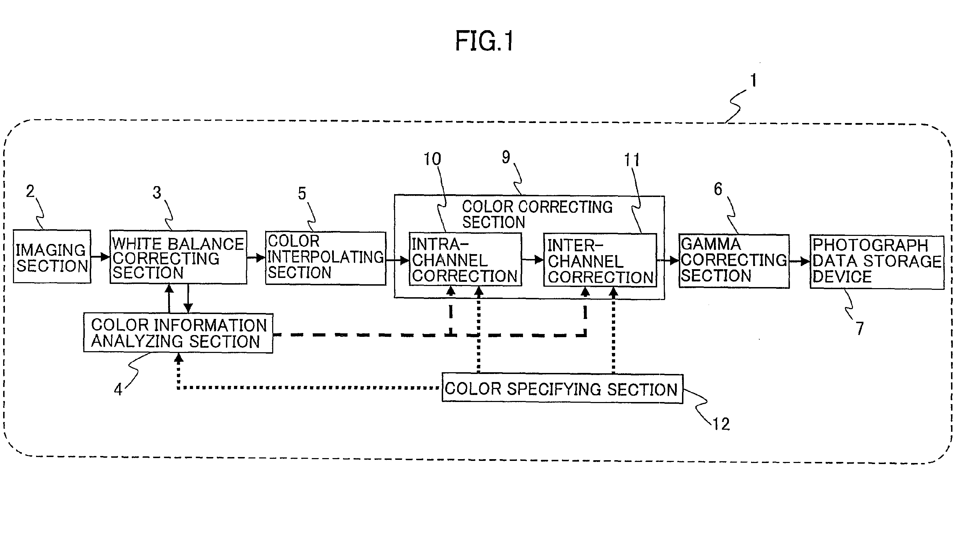

Hereinafter, an embodiment of the present invention will be described with reference to the attached drawings. Fig. 1 is a functional block diagram of electronic equipment according to the present invention. The present invention is applicable to any electronic equipment having a photograph function, including a digital camera, a camera-equipped telephone, a camera-equipped PDA, a camera-equipped watch and a camera-equipped computer. However, the present invention is particularly suited to portable electronic equipment.

In a suitable embodiment of the present invention, electronic equipment 1 according to the present invention comprises an imaging section 2, a white balance correcting section 3, a color information analyzing section 4, a color interpolating section 5, a gamma correcting section 6, and a photograph data storage device 7, as in the case of conventional electronic equipment having a photograph function.

The imaging section 2 comprises a light detector that converts light into an electrical signal. As the light detector, a solid-state image sensor such as a CCD sensor or a CMOS sensor is generally used. When only one solid-state image sensor is used, an electrical signal representing a number of different color components can be obtained by combining the image sensor with a color filter. The color filter is classified into a primary color filter and a complementary color filter. When the primary color filter is used, an electrical signal representing R (red), G (green), B (blue) is obtained. Further, when the complementary color filter is used, an electrical signal representing C (cyan), M (magenta), Y (yellow) is obtained. However, in a suitable embodiment, regardless of which of the above color filters is used, the output of the imaging section 2 is desirably an RGB format. Thus, when the complementary color filter is used, the imaging section 2 desirably comprises CMY-RGB converting means. In addition, the imaging section 2 desirably further comprises an amplifier which amplifies an output electrical signal of the solid-state image sensor, an AE function which adjusts the gain of the amplifier according to the brightness of light entering the solid-state image sensor, and an A/D converter which digitizes an output signal of the solid-state image sensor. It is also possible to adopt an embodiment in which the A/D converter is placed after the white balance correcting section 3 which will be described later.

The white balance correcting section 3 corrects the white balance of data output from the imaging section 2. The correction of the white balance is carried out by adjusting the brightness balance of each color component contained in the data output from the imaging section 2. The degree of the adjustment, i.e. the degree of the correction of the white balance, is controlled by the color information analyzing section 4. The color information analyzing section 4 not only analyzes data output from the imaging section 2 to acquire information about color distribution of the data but also controls the degree of correction made by the white balance correcting section 3 based on the information. This color information will be referred to as "first color information" so as to distinguish it from color information specified by a color specifying section to be described later. The first color information includes at least information about the ratio of the brightnesses of color components contained in data output from the imaging section 2, i.e. the color difference. The color difference information may be converted into information in the form of so-called color temperature. Further, the first color information may include the location dependency of color difference.

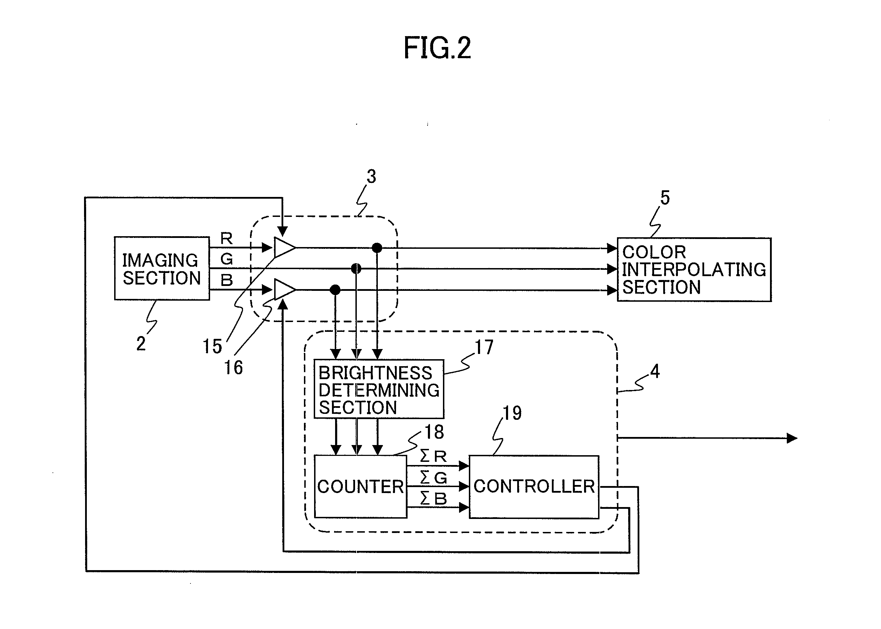

An example of the white balance correcting section 3 and the color information analyzing section 4 will be described by use of Fig. 2. The white balance correcting section 3 comprises white balance amplifiers 15 and 16, and the color information analyzing section 4 comprises a brightness determining section 17, a counter 18 and a controller 19. Further, in the present example, the imaging section 2 outputs beyer-type data, i.e. data of a type that data representing two G components, data representing one R component and data representing one B component are contained in a unit area. The brightness determining section 17 determines whether the brightnesses of all of R, G and B components are equal to or higher than a predetermined threshold value in all of unit areas constituting data output from the imaging section 2. The counter 18 accumulates the brightnesses of R, G and B in the unit areas which are higher than the predetermined threshold value and passes the results to the controller 19. The controller 19 adjusts not only the gain of the white balance amplifier 15 according to the ratio between the accumulated brightness of R and the accumulated brightness of G but also the gain of the white balance amplifier 16 according to the ratio between the accumulated brightness of B and the accumulated brightness of G. Even if the gains of the white balance amplifiers 15 and 16 have already been adjusted once, the white balance amplifiers 15 and 16 may be readjusted by taking a new image by the imaging section 2, correcting the image by the white balance amplifiers 15 and 16, and repeating the above procedures on the corrected data.

Hereinafter, the functional block of the electronic equipment according to the present invention will be further described with reference to Fig. 1. The color interpolating section 5 is a section for preparing photograph data that can be displayed as an image by a personal computer or the like and is required when a short-plate-type color sensor, i.e. a sensor comprising a combination of a solid-state image sensor and a color filter, is used in the imaging section 2. Since data obtained by the short-plate-type color sensor is data having a format corresponding to the color arrangement of the color filter, data representing color components exist with some space therebetween on the image plane. The color interpolating section 5 prepares photograph image data that can be displayed as a color image by a personal computer or the like by filling data-missing spots on the image plane by a color interpolating process for each of color components of data output from the imaging section 2. Such an interpolating process is called CFA (Color Filter Array) interpolation. There exist a variety of methods for conducting CFA interpolation. An example thereof is a method using a data value obtained by totaling some data values in the vicinity of a data-missing spot with appropriate weight added to the data values as a data value for the data-missing spot.

In the present embodiment, the color interpolating section 5 is provided after the white balance correcting section 3, and data with corrected white balance is subjected to the CFA interpolating process. However, in other embodiments, the color interpolating section 5 may be placed immediately after the imaging section 2 or after a color correcting section 9 which will be described later.

Further, in the present embodiment, data output from the imaging section 2 is digitized before the white balance correcting section 3. However, in other embodiments, when signal processing in the white balance correcting section 3 is performed on analog data, data corrected by the white balance correcting section must be digitized before the CFA interpolating process is carried out. In this case, the foregoing A/D converter must be placed before the color interpolating section 5.

The gamma correcting section 6 performs a gamma correction on image data. The photograph data storage device 7 comprises a recording medium for storing image data. Illustrative examples of the recording medium include a flash memory, a compact flash, and an SD card.

In addition to the above constituents, the electronic equipment according to the present invention comprises the color correcting section 9. The color correcting section 9 performs a color correction on data whose white balance has been corrected by the white balance correcting section 3.

In the most suitable embodiment, the color correcting section 9 is constituted to perform two correction processes, i.e. an intra-channel correction 10 and an inter-channel correction 11. As a matter of course, the color correction process is not limited to these as long as the color of a photograph image can be corrected. However, hereinafter, as the most suitable embodiment of the present invention, a constitution wherein the color correcting section 9 performs the intra-channel correction 10 and the inter-channel correction 11 as described above will be described.

In the intra-channel correction 10, a tone correction is performed on each of color components constituting data by use of an appropriate tone correction curve. This tone correction may be carried out for the purpose of absorbing individual variability in the output characteristics of the imaging section 2. When the output characteristics of the imaging section 2 are ideal or the price of the electronic equipment is desired to be lowered, an embodiment without the intra-channel correction 10 is also conceivable. In the inter-channel correction 11, a correction taking into consideration relationships with other color components is performed on each of color components constituting data. In a preferred embodiment, for each pixel, such a matrix calculation is performed that the data value of each color component is converted into the linear sum of the data values of all color components. As a matter of course, a variety of methods may be used to perform the calculation.

A number of tone correction curves and mixing matrices are prepared for the above corrections, and optimum ones are used according to the color environment at the time of photographing. In order for the color correcting section 9 to judge the color environment at the time of photographing, in the most suitable example, the color correcting section 9 is preferably constituted such that it uses the above first color information obtained in the color information analyzing section 4.

Further, more preferably, the electronic equipment according to the present invention further comprises a color specifying section 12 that specifies color that a user desires to add to an image, and the color correcting section 9 is constituted such that it selects the optimum tone correction curve or matrix by using color information specified by the color specifying section 12 alone or in combination with the foregoing first color information. Hereinafter, the color information specified by the color specifying section 12 will be referred to as "second color information" so as to distinguish it from the color information obtained by the foregoing color information analyzing section 4. The contents of the second color information may be color temperature, for example.

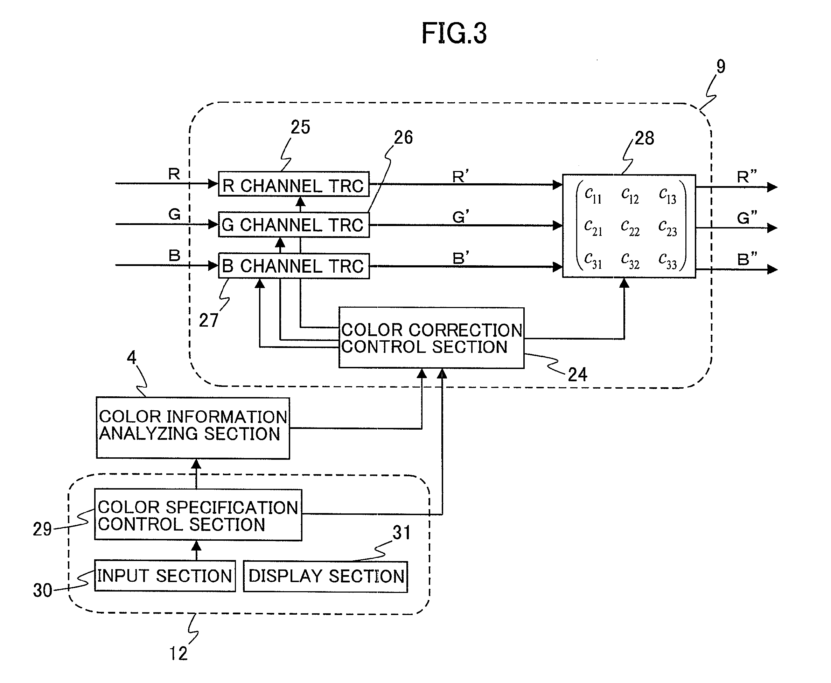

The color correcting section 9 will be further described by use of Fig. 3. Fig. 3 is a functional block diagram of the function of the color correcting section 9. In an embodiment of Fig. 3, data to be input into the color correcting section 9 are constituted by color components R, G and B. The color correcting section 9 comprises a color correction control section 24, a tone correcting section 25 for an R channel, a tone correcting section 26 for a G channel, a tone correcting section 27 for a B channel, and a matrix calculating section 28. The color correction control section 24 stores a number of tone correction curves and mixing matrices in advance. Further, the color correction control section 24 selects and sets tone correction curves to be used in the tone correcting sections 25, 26 and 27 for R, G and B channels based on the first color information provided by the color information analyzing section 4 and the second color information provided by the color specifying section 12. Similarly, the color correction control section 24 selects and sets a mixing matrix to be used in the matrix calculating section 28 based on the first color information and the second color information.

The first color information that the color information analyzing section 4 provides to the color correcting section 9 preferably includes the color difference or color temperature of data whose white balance is not yet corrected and location dependency thereof. However, the first color information may include only one kind of information such as a color difference or color temperature, which may be more preferable in some cases in view of cost and size.

The color specifying section 12 comprises a color specification control section 29, an input section 30, and a display section 31. The input section 30 is a user interface such as a keypad, a dial switch or a touch panel. The color specification control section 29 stores a number of second color informations and passes second color information that a user has selected by use of the input section 30 to the color correction control section 24 of the color correcting section 9. The display section 31 displays a number of second color informations and is preferably a display such as an LCD. However, it may be a seal capable of displaying second color information. The user selects desired second color information from a number of second color informations displayed on the display section 31 and specifies the desired information by means of the input section 30. The color specification control section 29 passes the selected and specified second color information to the color correction control section 24.

Further, the color specification control section 29 may be constituted such that it passes the second color information to the controller 19 of the color information analyzing section 4. In this case, the color information analyzing section 4 can be constituted such that it produces the first color information by use of the second color information as well as data output from the imaging section 2. For instance, when both the first color information and the second color information are color temperature, the color information analyzing section 4 produces, as the first color information, the color temperature of the second color information, if color temperature obtained by analyzing the data output from the imaging section 2 is significantly different from the color temperature of the second color information. In another instance, the first color information is produced by adding the difference between the color temperature obtained by analyzing the data output from the imaging section 2 and the color temperature of the second color information to color temperature obtained by analysis with appropriate weighing.

An example of use of the first color information and the second color information in the color correction control section 24 is as follows. It is assumed that both the first color information and the second color information are color temperature. When the color temperature of the first color information and the color temperature of the second color information are significantly different from each other, the tone correction curve and mixing matrix are selected based on the color temperature of the second color information. When the first color information and the second color information are not significantly different from each other, the tone correction curve and mixing matrix are selected based on the color temperature of the first color information. In another example, the difference between the color temperature of the first color information and the color temperature of the second color information is added to the color temperature of the first color information after appropriate weight is added to the difference. In this example, the roles of the first color information and the second color information may be switched.

The second color informations displayed on the display section 31 may be given appropriate names that allow a user to understand the informations easily. For example, when the second color informations are color temperature, they may be displayed by such names as "outdoor (fine weather)" and "incandescent lamp" in place of "6500K" and "9000K".

Next, color correction in the color correcting section 9 will be described in detail. Data to be input into the color correcting section 9 is data whose white balance has already been corrected by the white balance correcting section 3 of Fig. 1. The tones of R, G and B components constituting data input into the color correcting section 9 are corrected into a nonlinear form in the respective tone correcting sections 25, 26 and 27 by use of different tone correction curves in accordance with the following expressions, for example.

$$
\left.
\begin{aligned}
R' &= a_R R + b_R + C_R (\tanh(R) - R)^{dR} \\
G' &= a_G G + b_G + C_G (\tanh(G) - G)^{dG} \\
B' &= a_B B + b_B + C_B (\tanh(B) - B)^{dB}
\end{aligned}
\right\} \quad \ldots \quad (\text{expression } 1)
$$

The coefficients $a_R$, $b_R$, $C_R$, $d_R$, $a_G$, $b_G$, $C_G$, $d_G$, $a_B$, $b_B$, $C_B$ and $d_B$ must be determined by experiments according to an image sensor product and a desired tone response.

The tone-corrected data are mixed by a mixing matrix in the matrix calculating section 28. More specifically, the tone-corrected data values (R' G' B') in a pixel are converted into a linear form (R" G" B") by use of a mixing matrix $C_{ij}$ in accordance with the following expression.

$$\begin{bmatrix} R'' \\ G'' \\ B'' \end{bmatrix} = \begin{bmatrix} C_{11} & C_{12} & C_{13} \\ C_{21} & C_{22} & C_{23} \\ C_{31} & C_{32} & C_{33} \end{bmatrix} \begin{bmatrix} R' \\ G' \\ B' \end{bmatrix} \quad \dots \quad \text{(expression 2)}$$

Different tone correction curves and mixing matrix are used according to color temperature given by the first color information or the second color information.

These tone correction curves and matrix calculating section 28 include an element which converts an output dependent on the sensitivity for each of R, G and B components of the image sensor into target standard color space and an element which converts the standard color space into an optimum one according to the color environment at the time of photographing. In particular, the element which converts an output dependent on the sensitivity for each of R, G and B components of the image sensor into standard color space must be determined in advance by experiments.

An example of a method for converting the output into the standard color space is a method of correcting the output so that it matches sRGB provided by International Electrotechnical Commission (IEC) as standard response characteristics. Further, illustrative examples of a method for converting the standard color space into one that corresponds to the color environment specified by a user include a method of determining specified color temperature from the standard color space arithmetically by use of an approximate expression and a method of converting the standard color space into the color temperature by use of a conversion table stored in a memory.

The following expression 3 is a mixing matrix used for adding red to a photograph which has been actually determined for a commercially available camera module.

$$\begin{bmatrix} 1.31826 & -0.44090 & -0.87038 \\ -0.14700 & 1.23222 & 0.005409 \\ -0.06613 & -0.32321 & 2.87442 \end{bmatrix} \quad \dots \quad \text{(expression 3)}$$

The following expression 4 represents an example of a mixing matrix for adding blue to a photograph which has been actually determined for the same camera module.

$$\begin{bmatrix} 3.00471 & -0.53087 & -0.13121 \\ -0.08806 & 1.32255 & -0.23657 \\ -0.10546 & -0.40824 & 1.37477 \end{bmatrix} \quad \dots \quad \text{(expression 4)}$$

These must be determined by experiments according to an image sensor product and desired color to be added.

Further, a data value resulting from conversion by use of the tone correction curves and the mixing matrix exceeds the range of the original data in some cases. In such a case, the following two solutions may be applied, for example. One of them is to increase the resolution of converted data. For example, when the resolution of original data is 12 bits, 2 bits are added to the data after conversion and it is treated as 14-bit data. The other solution is to multiply each data value by a coefficient which puts a value exceeding a range back into the range and then multiply the data value by the reciprocal of the coefficient used to restore the date value so as to minimize a calculation error caused by exceeding the range.

The electronic equipment 1 according to the present invention will be further described with reference to Fig. 1.

The electronic equipment 1 comprises two modes, i . e . a setting mode for setting parameters for the white balance correcting section 3 and the color correcting section 9 and a photographing mode for actually taking a photograph.

Each of the above functional blocks may be implemented by a special hardware circuit or by a combination of a general-purpose processor such as a CPU or DSP and computer software. In one embodiment, the white balance correcting section 3, the color information analyzing section 4 and the color interpolating section 5 are implemented by special circuits, and the color correcting section 9, the color specification control section 29 of the color specifying section 12 and the gamma correcting section 6 are implemented by software. In another embodiment, the white balance correcting section 3 and the color information analyzing section 4 are implemented by special circuits, and the color interpolating section 5, the color correcting section 9, the color specification control section 29 and the gamma correcting section 6 are implemented by software. In still another embodiment, all of the white balance correcting section 3, the color information analyzing section 4, the color interpolating section 5, the color correcting section 9, the color specification control section 29 and the gamma correcting section 6 may be implemented by software. It is needless to say that when the above functional blocks are implemented by software, a general-purpose processor such as a CPU or DSP is not necessarily provided for each of the functional blocks. It is also possible that all of these functions are implemented by a single CPU or DSP or that the color interpolating section 5 and the color correcting section 9 are implemented by a DSP and the color specification control section 29 is implemented by a CPU.

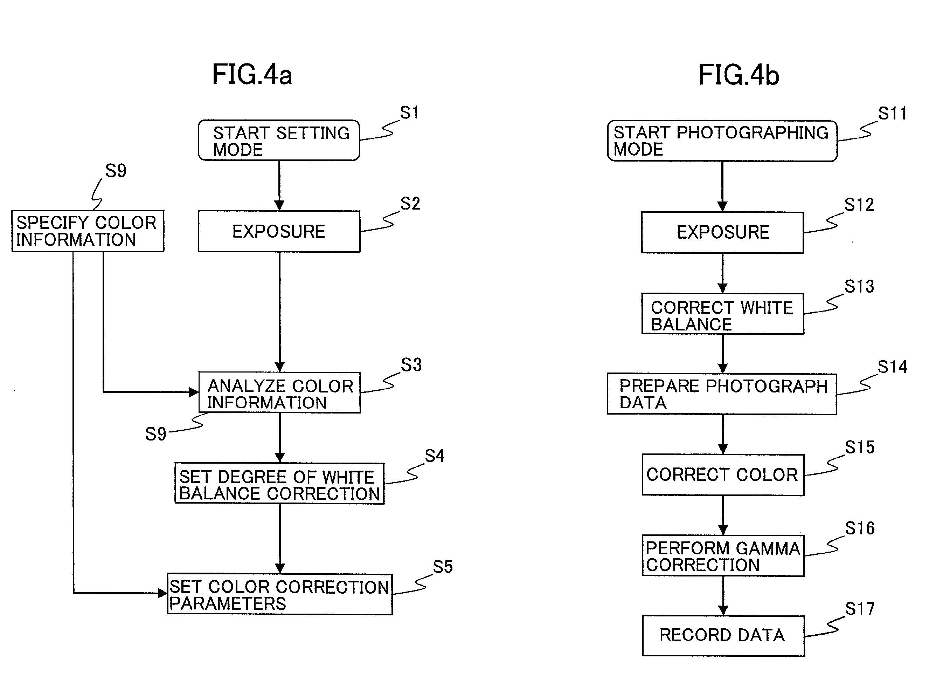

Next, the operation of the electronic equipment 1 will be described with reference to Figs. 4a and 4b. As described above, the electronic equipment 1 comprises two modes, i.e. the setting mode for setting parameters for the white balance correcting section 3 and the color correcting section 9 and the photographing mode for actually taking a photograph. Fig. 4a is a flowchart of the setting mode, and Fig. 4b is a flowchart of the photographing mode. First, the operation of the setting mode will be described by use of Fig. 4a. When the setting mode is started in STEP s1, data representing a plurality of color components is prepared by exposure (STEP s2). In STEP s3, the above data is analyzed to acquire first color information. In STEP s4, the degree of correction made by the white balance correcting section 3 is set based on the first color information, and in STEP s5, parameters for the color correcting section 9 are set based on the first color information. Further, in one example, a user specifies second color information from the color specifying section 12 (STEP s9). The second color information is used to determine the degree of correction made by the white balance correcting section 3 or the color correcting section 9.

Fig. 4b is a flowchart of the photographing mode. First, when the photographing mode is started (STEP s11), data representing a plurality of color components is prepared by exposure (STEP s12) . Then, the white balance of the data is corrected by the degree of correction set in the setting mode (STEP s13). In STEP s14, the data having corrected white balance is subjected to a CFA interpolating process so as to prepare photograph image data that can be displayed as a color image by a personal computer or the like. In STEP s15, the color of the image data is corrected by the parameters set in the setting mode. In STEP s16, a gamma correction is performed on the image data, and in STEP s17, the image data is recorded in the recording medium. In a suitable embodiment, the image data is compressed in accordance with an appropriate compression technique and then recorded in the recording medium.

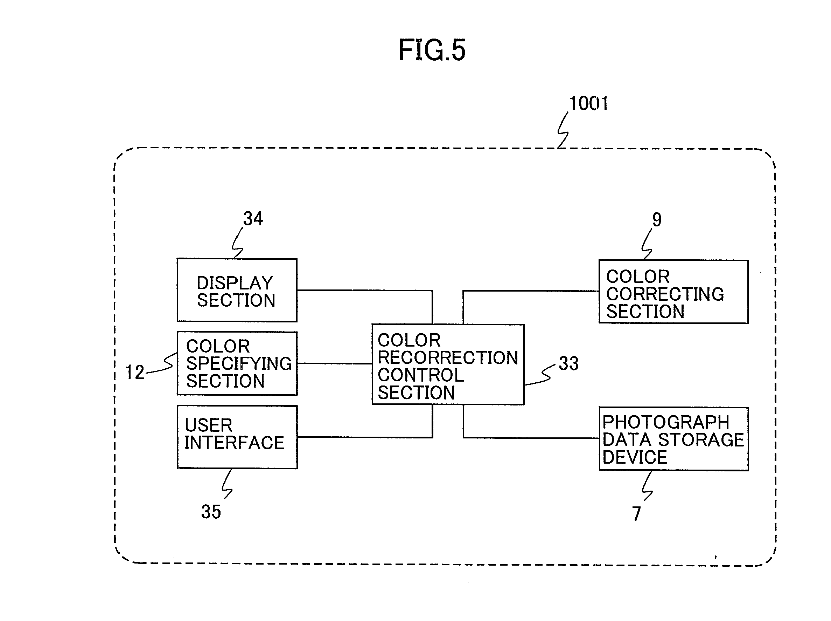

In another embodiment of the electronic equipment according to the present invention, the electronic equipment may be further provided with a function of further correcting the color of image data stored in the photograph data storage device 7. Such an embodiment will be described by use of Fig. 5. Fig. 5 is a functional block diagram showing an example of electronic equipment according to the present invention which comprises color recorrecting means. Electronic equipment 1001 comprises a color recorrection control section 33, a display section 34, and a user interface 35. To the color recorrection control section 33, a photograph data storage device 7, a color correcting section 9 and a color specifying section 12 are connected. Descriptions of constituents which are the same as those in Figs. 1 to 3 will be omitted. In a suitable embodiment, the color recorrecting means is implemented by a combination of a general-purpose processor such as a CPU or DSP and computer software. For this reason, in a suitable embodiment, the color recorrection control section 33 shares a general-purpose processor with the color correcting section 9 and the color specifying section 12. Further, for reductions in the size of the equipment and production costs, it is desirable that the display section 31 of Fig. 3 be also used as the display section 34 and the input section 30 of Fig. 3 be also used as the user interface 35. The electronic equipment 1001 has a photograph display mode for displaying photograph data stored in the photograph data storage device 7 in the display section 34. The electronic equipment is preferably constituted such that the color recorrecting function can be activated from the photograph display mode.

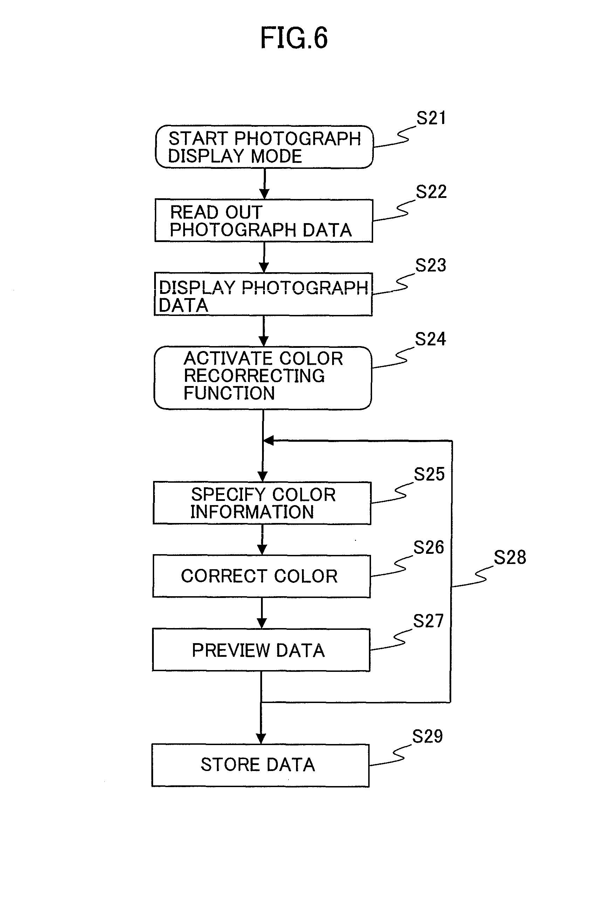

The operation of the electronic equipment 1001 with regard to the color recorrecting function will be described by use of Fig. 6. In STEP s21, the photograph display mode is started. Then, photograph data is read out from the photograph data storage device 7 (STEP s22) and displayed in the display section 34 (STEP s23). When a user desires to correct the color of the displayed photograph, he activates the color recorrecting function (STEP s24). The user selects and specifies appropriate color information out of a plurality of predetermined color informations (second color informations) from the color specifying section 12 (STEP s25) . In STEP s26, the color correcting section 9 corrects the color of the photograph data based on the specified second color information. When first color information is recorded in the photograph data, the first color information may also be used to correct the color. In STEP s27, the color-corrected data is displayed in the display section 34. If the user further corrects the color, he starts from specification of the color information again (STEP s28). In STEP s29, the color-corrected photograph data is stored in the photograph data storage device 7. These operations are controlled by the color recorrection control section 33.

(Example 1)

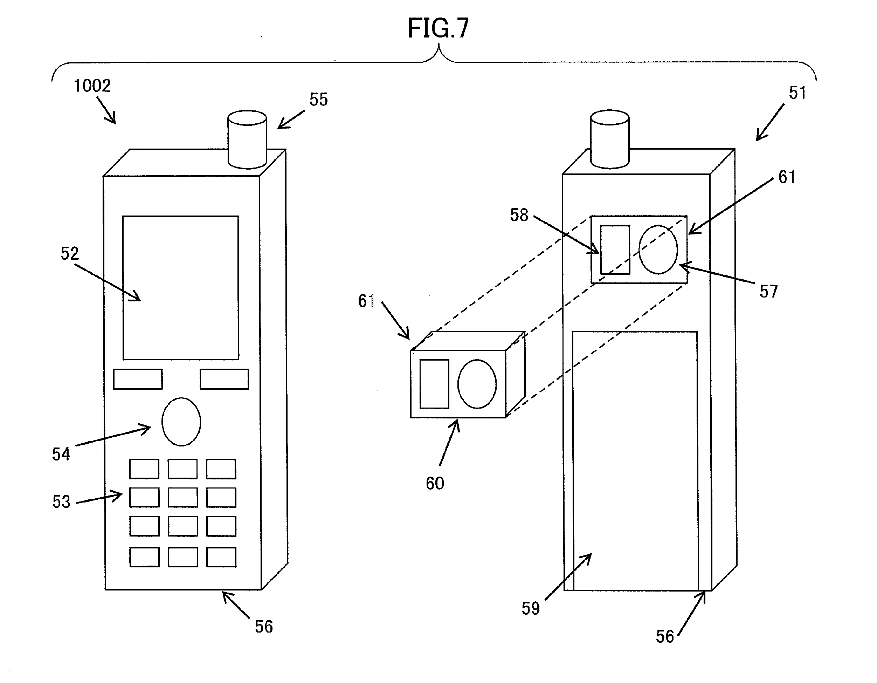

Example 1 is an example of application of the electronic equipment 1 shown in Fig. 1 and the electronic equipment 1001 shown in Fig. 5 to camera-equipped cellular phones. Fig. 7 is a schematic diagram showing the appearance of a camera-equipped cellular phone to which the present invention is applied.

A camera-equipped cellular phone 1002 comprises a display 52, a keypad 53, a function button 54 and an antenna 55 on its front surface and comprises a camera section 61, a battery cover 59 and the like on its rear surface. The phone 1002 further comprises a case 56 which holds the above constituents together. A camera-equipped cellular phone 51 is small and light and has size and weight suited to be held in one hand or carried in a handbag. The function button 54 is used to make or receive a phone call or as a shutter button at the time of photographing. When a user makes a phone call by use of the camera-equipped cellular phone 51, he enters a telephone number by means of the keypad 53 and presses the function button 54. Further, when a user takes a photograph, the user holds the camera-equipped cellular phone 51 with a lens 57 pointed at a subject and checks a preview image taken by a camera module 61 on the display 52. Then, a picture is taken at the press of the function button 54, and image data prepared by photographing is stored in a recording device provided in the camera-equipped cellular phone 51.

The camera section 61 comprises a light entering section 57 and LED lighting 58 and is constituted as a camera module having an independent case 60. Accordingly, the camera-equipped cellular phone 51 can be divided into the camera module 61 and the remaining portion (host module). By constituting the camera section as an independent module as described above, the camera module can have versatility and can be combined with other cellular phone or a PDA easily. Consequently, it becomes possible to sell the camera module as an independent product.

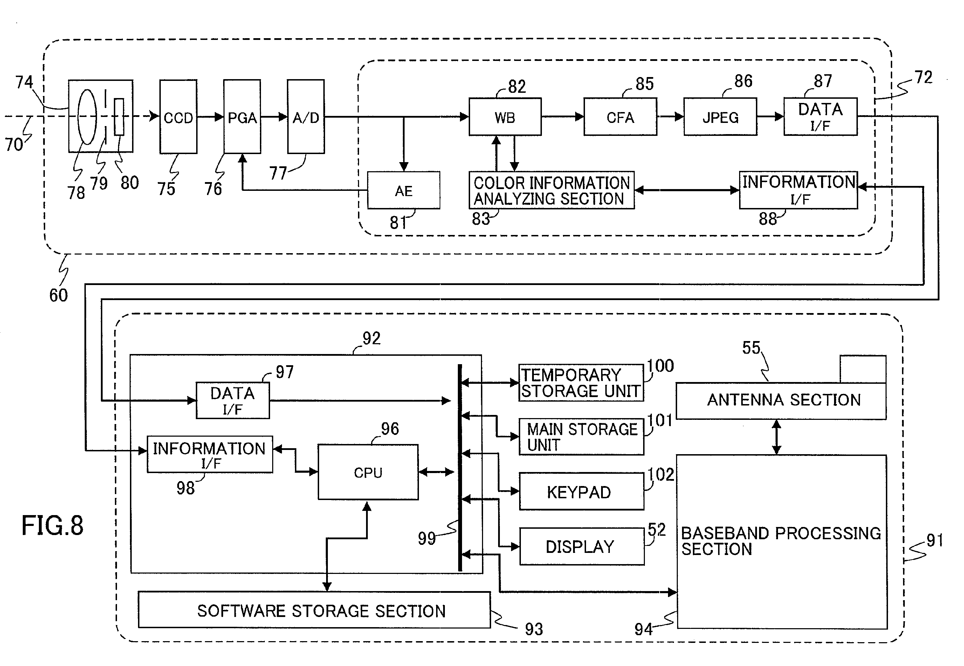

Fig. 8 is a diagram showing the hardware configuration of camera-equipped cellular phone 1002 to which the present invention is applied. The camera-equipped cellular phone 1002 comprises a camera module 60 and a host module 91. The camera module 60 comprises a lens block 74, a CCD sensor 75, a programmable gain amplifier (PGA) 76, an A/D converter 77, an AE control section 81, a white balance correcting section 82, a color information analyzing section 83, a color interpolating section 85, a JPEG compression section 86, a data interface 87, and an information interface 88. The lens block 74 comprises a lens 78, an aperture 79 and an optical low-pass filter 80. The CCD sensor 75 is combined with a primary color filter of beyer arrangement. The color information analyzing section 83 corresponds to the color information analyzing section 4 of Fig. 1, and the white balance correcting section 82 corresponds to the white balance correcting section 3 of Fig. 1. Further, the white balance correcting section 82, the color information analyzing section 83, the color interpolating section 85, the JPEG compression section 86, the data interface 87 and the information interface 88 are constituted by one ASIC chip as a camera LSI 72.

The host module 91 comprises an application processor 92, a software storage section 93, a baseband processing section 94, an antenna section 55, a temporary storage unit 100, a main storage unit 101, a keypad 102 and a display 52. The application processor 92 comprises a CPU 96, a data interface 97, an information interface 98 and a bus 99. A general-purpose processor such as a DSP may be used in place of the CPU 96. The keypad 102 comprises the keypad 53 and function button 54 of Fig. 7. The bus 99 connects the CPU 96 to the temporary storage unit 100, the main storage unit 101, the keypad 102, the display 52 and the baseband processing section 94. The software storage section 93 and the information interface 98 are connected to the CPU 96 by different routes from the bus 99. The baseband processing section 94 implements the telephone function of the host module 91. The software storage section 93 stores a computer program for causing the CPU 96 to operate as an information processing unit, and a ROM or a flash memory is used as a storage medium.

The CPU 96 fulfills various functions such as a color correcting function and a color specification controlling function based on the computer program stored in the software storage section 93. A function corresponding to the color correcting section 9 shown in Fig. 3 is implemented by the computer program stored in the software storage section 93. As for the color information specifying section 12 of Fig. 3, the color specification control section 29 is implemented by the CPU 96 and the computer program stored in the software storage section 93, the input section 30 is implemented by the keypad 102, and the display section 31 is implemented by the display 52. Further, the color recorrection control section 33 is also implemented by the CPU 96 and the computer program stored in the software storage section 93. In addition, the CPU 96 performs various information processings such as compression and decompression of image data, control associated with display of image data on the display 52, storing of image data, and interpretation of an input made through the keypad 102.

The camera-equipped cellular phone 1002 has a setting mode, a photographing mode and a photograph display mode with respect to a camera function. In the setting mode, the degree of correction in the white balance correcting section 82 and parameters for color correction are determined. In the photographing mode, a photograph is taken, and the photograph data is stored in the main storage unit 101. In the photograph display mode, the photograph data stored in the main storage unit 101 is displayed on the display 52, and the color of the photograph data can be corrected again. In this embodiment, to enter the setting mode, a user presses the function button 54 halfway with the camera function activated. Then, when the user fully presses the function button 54, the cellular phone enters the photographing mode. In another embodiment, the cellular phone enters the setting mode at the press of the function button 54 and then automatically switches to the photographing mode to take a photograph.

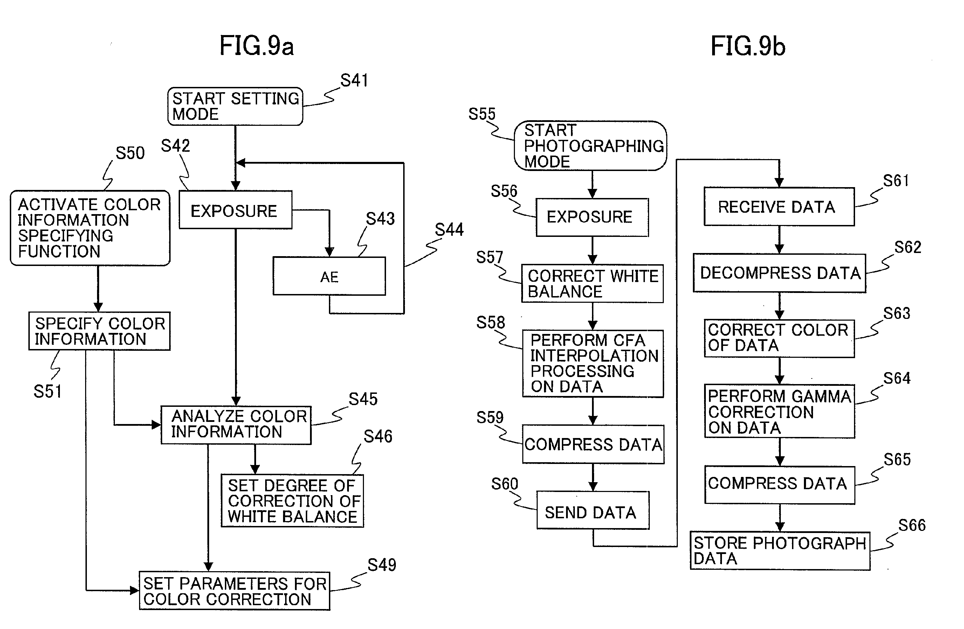

The operations of the camera-equipped cellular phone 1002 will be described by use of Figs. 9a to 10. Fig. 9a is a flowchart of operations in the setting mode. First, the setting mode is started in STEP s41. Exposure is carried out in STEP s42. That is, light having passed through the lens 78, the aperture 79 and the optical low-pass filter 80 is converted into an analog electrical signal by the CCD sensor 7. Since the CCD sensor 7 is combined with the primary color filter of beyer arrangement, the above electrical signal is data representing a plurality of color components. After amplified by the PGA 76, the above analog data is converted into digital data by the A/D converter 77. In STEP s43, adjustment of exposure is conducted. In this step, the AE control section 81 analyzes the data output from the A/D converter 77 and adjusts the amplification factor of the PGA 76 and the exposure time of the CCD sensor 7 such that the strength of the signal amplified by the PGA 76 fits within the range of the A/D converter 77. The exposure-exposure adjustment may be repeated several times until appropriate exposure is obtained (STEP s44).

After completion of the exposure adjustment, the degree of correction of white balance is adjusted. In STEP s45, the color information analyzing section 83 analyzes the data subjected to the exposure adjustment to extract information about the brightnesses of color components contained in the data. This information is referred to as first color information as described above. Further, the color information analyzing section 83 adjusts the degree of correction made by the white balance correcting section 82 based on the obtained first color information (STEP s46) .

In STEP s49, parameters for color correction are determined. The color correcting section 9 shown in Fig. 3 is implemented by use of the CPU 96 and the computer program stored in the software storage section 93. Firstly, the CPU 96 receives the first color information from the color information analyzing section 83 through the information interfaces 88 and 98. Then, the CPU 96 cooperates with the computer program stored in the software storage section 93 to determine parameters used for color correction by use of the first color information. As described above, the parameters are tone correction curves used for intra-channel correction and a mixing matrix used for inter-channel correction.

When a user desires to specify color information to be added to a photograph, he activates a color information specifying function (STEP s50) and specifies second color information by means of the keypad 102 (STEP s51). The specified second color information is used alone or in combination with the first color information in determining the degree of correction of white balance or the parameters for color correction.

Fig. 9b is a flowchart of operations in the photographing mode. In STEP s55, the photographing mode is started. In STEP s56, exposure is carried out, and light having entered the CCD sensor 7 is converted into an analog electrical signal, amplified by the PGA 76 and then converted into digital data by the A/D converter 77. At that time, the exposure time and amplification factor set in STEP s43 in the setting mode are used. In STEP s57, the white balance of the digital data is corrected in the white balance correcting section 82 by the degree of correction set in STEP s46 in the setting mode. In STEP s58, the color interpolating section 85 performs CFA interpolation processing on the data whose white balance has been corrected so as to prepare photograph data. The color interpolating section 85 corresponds to the color interpolating section 5 of Fig. 1. In STEP s59, the prepared photograph data is compressed in a JPEG format in the JPEG compression section 86. The reason for compressing the data is to render the amount of data flowing between the data interfaces 87 and 97 small. However, when the bandwidth of the interface is sufficiently wide or when the size of the photograph data is small, this step and the JPEG compression section 86 are not necessarily required. Further, the compression technique does not need to be limited to JPEG, and other technique such as JPEG 2000 may be used. In STEP s60, the compressed photograph data is sent from the data interface 87 to the host module 91.

In STEP s61, the host module 91 receives the photograph data from the camera module 60 through the data interface 97 and stores the photograph data in the temporary storage unit 100. In STEP s62, the photograph data is decompressed. In accordance with the computer program stored in the software storage section 93, the CPU 96 reads out the compressed photograph data from the temporary storage unit 100, decompresses it, and stores it in the temporary storage unit 100 again. In STEP s63, the color of the photograph data is corrected. First, in accordance with the computer program stored in the software storage section 93, the CPU 96 reads out the decompressed photograph data from the temporary storage unit 100. Then, the CPU 96 performs an intra-channel correction and an inter-channel correction on the photograph data by use of the tone correction curves and mixing matrix set in STEP s49 of Fig. 9a. It is possible to store the photograph data in the temporary storage unit 100 between the intra-channel correction and the inter-channel correction and carry out these correction processes sequentially or to carry out these two processes simultaneously. Finally, the CPU 96 stores the corrected photograph data in the temporary storage unit 100 again. In STEP s64, in accordance with the above computer program, the CPU 96 reads out the photograph data from the temporary storage unit 100, performs a gamma correction on the data, and returns the data into the temporary storage unit 100. Finally, in accordance with the above computer program, the CPU 96 reads out the photograph data from the temporary storage unit 100, compresses the data in an appropriate format such as JPEG (STEP s65), and stores the compressed data in the main storage unit 101.

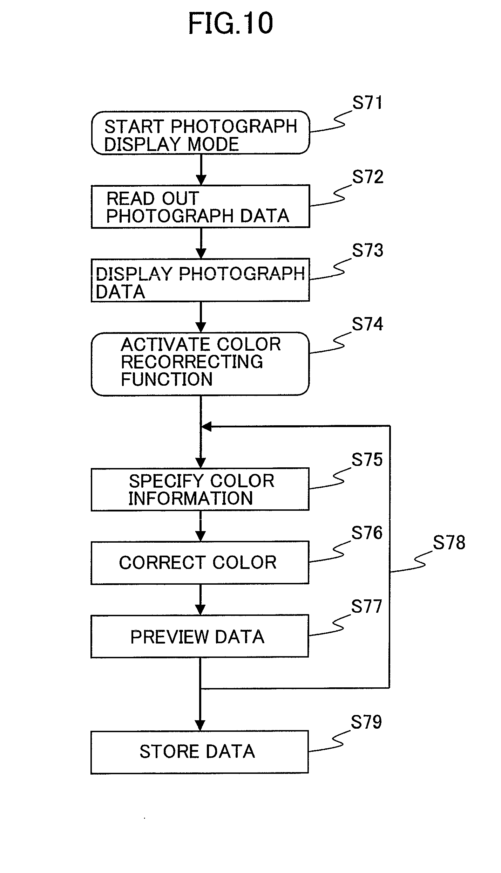

Fig. 10 is a flowchart of operations in the photograph display mode. In STEP s71, the user initiates the photograph display mode by operating the keypad 102. Thereby, in accordance with the computer program stored in the software storage section 93, the CPU 96 reads out the photograph data from the main storage unit 101 (STEP s72) and displays the photograph data on the display 52 (STEP s73). At this point, when the user desires to correct the color of the displayed photograph again, the user activates the color recorrecting function by predetermined operation of the keypad 102 (STEP s74). In STEP s75, the user selects and specifies appropriate color information out of predetermined color informations (second color informations). The keypad 102 is also used for this operation. In STEP s76, the above computer program and the CPU 96 select appropriate tone correction curves and mixing matrix based on the input from the keypad 102 and performs a color correction on the photograph data. In STEP s77, the color-corrected photograph data is displayed on the display 52. When the user desires to further correct the color, the user starts from specification of the color information again (STEP s78). In STEP s79, the color-corrected photograph data is stored in the main storage unit 101.

(Example 2)

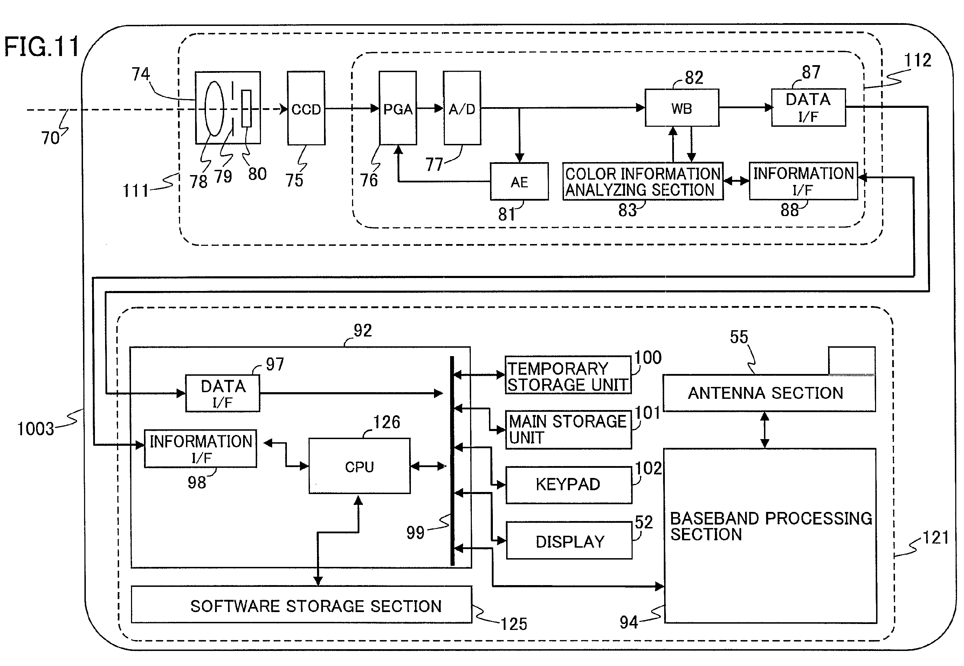

Example 2 is another example of application of the electronic equipment 1 shown in Fig. 1 and the electronic equipment 1001 shown in Fig. 5 to camera-equipped cellular phones. Fig. 11 is a diagram showing the hardware configuration of camera-equipped cellular phone 1003 in the present Example 2. The appearance of the camera-equipped cellular phone 1003 is the same as that of the camera-equipped cellular phone 1002 in Example 1 shown in Fig. 7.

The camera-equipped cellular phone 1002 comprises a camera module 111 and a host module 121. As in the case of the camera module 60 in Example 1, the camera module 111 comprises a lens block 74, a CCD sensor 75, a programmable gain amplifier (PGA) 76, an A/D converter 77, an AE control section 81, a white balance correcting section 82, a color information analyzing section 83, a data interface 87, and an information interface 88. Further, the CCD sensor 75 is combined with a primary color filter of beyer arrangement. However, unlike the camera module 60 of Example 1, the camera module 111 does not have a color interpolating section and a JPEG compression section. Accordingly, the output data of the camera module 111 retains the format of the CCD sensor 75. With the constitution of Example 2, a burden of preparing photograph image data from the output data of the camera module 111 by color interpolation processing in the host module increases. However, since the hardware circuit of the camera module 111 can be simplified, the production cost of the camera module 111 can be kept low as compared with that in Example 1. In the present example, the PGA 76, the A/D converter 77, the AE control section 81, the white balance correcting section 82, the color information analyzing section 83, the data interface 87 and the information interface 88 are constituted by one ASIC chip as a camera LSI 112.

The hardware constitution of the host module 121 is basically the same as that of the host module 91 of Example 1. However, a computer program to be stored in a software storage section is different from that in the host module of Example 1. A computer program to be stored in a software storage section 125 in Example 2 must cause a CPU 126 in the host module 121 to operate as the color interpolating section 5 of Fig. 1. Further, since color interpolation processing is complicated processing, the CPU 126 is preferably faster in processing than the CPU 96 in Example 1.

As in the case of the camera-equipped cellular phone 1002 in Example 1, the camera-equipped cellular phone 1003 has a setting mode, a photographing mode and a photograph display mode with respect to a camera function.

Next, the operation of the camera-equipped cellular phone 1003 will be described. Operations in the setting mode and the photograph display mode are the same as those of the camera-equipped cellular phone 1002 in Example 1. The photographing mode in Example 2 is different from that in Example 1 in that color interpolation processing is conducted in the host module. The camera module is responsible for as far as correction of white balance, and white-balance-corrected data is directly sent to the host module through the data interface 87. The host module receives the data through the data interface 97 and stores the data in a temporary storage unit 100. Then, in accordance with the computer program stored in the software storage section 125, the CPU 126 reads out the received data from the temporary storage unit 100 and performs color interpolation processing on the data to prepare photograph data. The prepared photograph data is stored in the temporary storage unit 100 again. Thereafter, as in the case of Example 1, the above program and the CPU 126 performs a color correction, a gamma correction, compression of the data and storing of the compressed photograph data in a main storage unit 101. An embodiment in which the color correction is performed prior to the color interpolation processing is also conceivable. In that case, a computer program which implements such a processing sequence must be stored in the software storage section 125.

(Example 3)

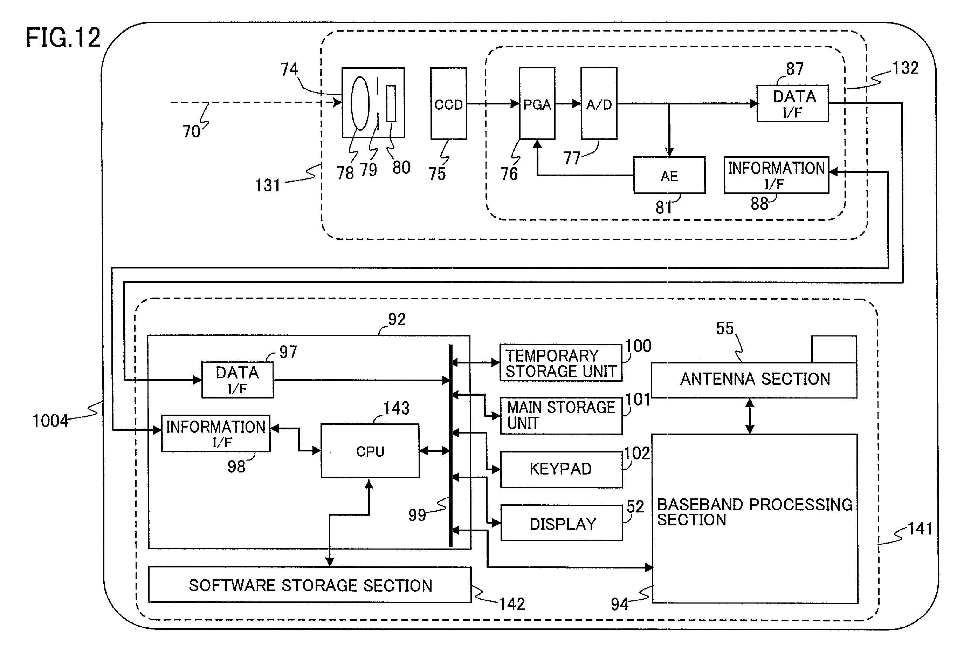

Example 3 is still another example of application of the electronic equipment 1 shown in Fig. 1 and the electronic equipment 1001 shown in Fig. 5 to camera-equipped cellular phones. Fig. 12 is a diagram showing the hardware configuration of camera-equipped cellular phone 1004 in the present Example 3. The appearance of the camera-equipped cellular phone 1004 is the same as that of the camera-equipped cellular phone 1002 in Example 1 shown in Fig. 7.

The camera-equipped cellular phone 1004 comprises a camera module 131 and a host module 141. As in the case of the camera module 60 in Example 1, the camera module 131 comprises a lens block 74, a CCD sensor 75, a programmable gain amplifier (PGA) 76, an A/D converter 77, an AE control section 81, a data interface 87, and an information interface 88. Further, the CCD sensor 75 is combined with a primary color filter of beyer arrangement. However, unlike the camera module 60 of Example 1, the camera module 131 does not have a white balance correcting section, a color information analyzing section, a color interpolating section and a JPEG compression section. These functions are implemented by a CPU 143 and a computer program stored in a software storage section 142 in the host module 141. The CPU 143 and the computer program stored in the software storage section 142 will be further described later. Accordingly, the output data of the camera module 131 retains the format of the CCD sensor 75. The PGA 76, the A/D converter 77, the AE control section 81, the data interface 87 and the information interface 88 are constituted by one ASIC chip as a camera LSI 132.

The hardware constitution of the host module 141 is basically the same as that of the host module 91 of Example 1. However, the computer program stored in the software storage section is different from that in the host module of Example 1. The computer program stored in the software storage section 142 in Example 3 cooperates with the CPU 143 of the host module 141 to implement the white balance correcting section 3, the color information analyzing section 4, the color interpolating section 5, the color correcting section 6 and the gamma correcting section 8 in Fig. 1. Further, the computer program stored in the software storage section 142 cooperates with the CPU 143 of the host module 141 to implement the color specification control section (refer to Fig. 3) of the color specifying section 12 and the color recorrection control section 33 (refer to Fig. 5) . Further, the computer program stored in the software storage section 142 cooperates with the CPU 143 of the host module 141 to implement compression and decompression of data. With the constitution of Example 3, data processing in the host module increases as compared with that in Example 1. However, since the hardware circuit of the camera module can be simplified accordingly, the production cost of the camera module can be kept low as compared with that in Example 1.

As in the case of the camera-equipped cellular phone 1002 in Example 1, the camera-equipped cellular phone 1004 in Example 3 has a setting mode, a photographing mode and a photograph display mode with respect to a camera function. In the setting mode, the degree of correction of white correction and parameters for color correction are determined. In the photographing mode, a photograph is taken, and the photograph data is stored in the main storage unit 101. In the photograph display mode, the photograph data stored in the main storage unit 101 is displayed on the display 52, and the color of the photograph data can be corrected again. The camera-equipped cellular phone 1004 enters the setting mode at the press of an appropriate button in the keypad 102, and the degree of correction of white balance and parameters for color correction are determined. After these are determined, the cellular phone 1004 automatically switches to the photographing mode, carries out exposure again, prepares photograph image data and stores the data in the main storage unit 101.

According to the present invention described above, a photograph which reflects the color of a subject in the color environment at the time of photographing can be prepared even when a processing capacity for determining the degree of correction of white balance in the preparation time prior to the photographing is limited.

Thus, descriptions of suitable embodiments of the present invention have been so far given. It is needless to say that the embodiments described above are merely examples for carrying out the invention, the present invention is not limited to these embodiments, and various other embodiments can be practiced within the scope of the present invention.

**Claims**

1. Electronic equipment having a photograph function, comprising:

an imaging section,
a white balance correcting section,
a color information analyzing section, and
a color correcting section,

wherein
the imaging section converts measured light into data representing a plurality of color components and outputs the data,
the white balance correcting section corrects the white balance of the data output from the imaging section,
the color information analyzing section acquires first color information about the brightnesses of the color components contained in the data output from the imaging section and controls the degree of correction made by the white balance correcting section by use of the first color information, and the color correcting section corrects the color of the data corrected by the white balance correcting section.

2. The electronic equipment of claim 1, wherein the color correcting section comprises:

   means for adjusting the tone of each of the color components, and
   means for conducting a correction taking into consideration relationships with other color components on each of the color components.

3. The electronic equipment of claim 1 or 2, wherein the color correcting section corrects the color of the data corrected by the white balance correcting section, by use of the first color information.

4. The electronic equipment of any of claims 1 to 3, further comprising:

   a color specifying section,
   wherein
   the color specifying section allows a user to specify second color information out of a plurality of predetermined color informations, and
   the color correcting section corrects the color of the data corrected by the white balance correcting section, by use of the first color information and/or the second color information.

5. The electronic equipment of any of claims 1 to 4, further comprising:

   color recorrecting means,
   wherein
   the color recorrecting means further corrects the color of the data whose color has been corrected by the color correcting section, by use of the first color information and/or the second color information.

6. The electronic equipment of any of claims 1 to 5, further comprising:

   a color interpolation processing section,
   wherein
   the color interpolation processing section performs color interpolation processing on the data corrected by the white balance correcting section to prepare photograph data, and the color correcting section corrects the color of the data subjected to the color interpolation processing performed by the color interpolation processing section.

7. The electronic equipment of any of claims 1 to 6, further comprising:

   a gamma correcting section,
   wherein
   the gamma correcting section performs a gamma correction on data corrected by the color adaptation correcting section.

8. The electronic equipment of claim 6, wherein the white balance correcting section, the color adaptation correcting section and the color interpolation processing section are implemented by ASIC.

9. The electronic equipment of claim 6, wherein the white balance correcting section, the color adaptation correcting section and the color interpolation processing section are implemented by use of a general-purpose processor and a computer program.

10. The electronic equipment of any of claims 1 to 9, which is portable.

**11.** Portable electronic equipment comprising:

a camera module having a photograph function, and
a host module having a telephone function,
wherein
the camera module comprising:
an imaging section which converts measured light into data representing a plurality of color components and outputs the data,
a white balance correcting section which corrects the white balance of the data output from the imaging section,
a color information analyzing section which acquires first color information about the brightnesses of the color components contained in the data output from the imaging section and controls the degree of correction made by the white balance correcting section by use of the first color information,
a color interpolation processing section which performs color interpolation processing on the data corrected by the white balance correcting section to prepare photograph data,
a photograph data transmitting section which transmits the photograph data to the host module, and
an information data transmitting section which transmits the first color information to the host module, and
the host module comprising:
a photograph data receiving section which receives the photograph data,
an information data receiving section which receives the first color information, and
a color correcting section which corrects the color of the photograph data.

**12.** Portable electronic equipment comprising:

a camera module having a photograph function, and
a host module having a telephone function,
wherein
the camera module comprising:
an imaging section which converts measured light into data representing a plurality of color components and outputs the data,
a white balance correcting section which corrects the white balance of the data output from the imaging section,
a color information analyzing section which acquires first color information about the brightnesses of the color components contained in the data output from the imaging section and controls the degree of correction made by the white balance correcting section by use of the first color information,
an image data transmitting section which transmits the data corrected by the white balance correction section to the host module, and
an information data transmitting section which transmits the first color information to the host module, and
the host module comprising:
an image data receiving section which receives the data corrected by the white balance correcting section,
an information data receiving section which receives the first color information,
a color interpolation processing section which performs color interpolation processing on the data corrected by the white balance correcting section to prepare photograph data, and
a color correcting section which corrects the color of the photograph data.

**13.** Portable electronic equipment comprising:

a camera module having a photograph function, and
a host module having a telephone function,
wherein
the camera module comprising:
an imaging section which converts measured light into data representing a plurality of color components and outputs the data, and
an image data transmitting section which transmits the data output from the imaging section to the host module, and
the host module comprising:
an image data receiving section which receives the data output from the imaging section,
a white balance correcting section which corrects the white balance of the received data output from the imaging section, a color information analyzing section which acquires first color information about the brightnesses of the color components contained in the received data output from the imaging section and controls the degree of correction made by the white balance correcting section by use of the first color information,
a color interpolation processing section which performs color interpolation processing on the data corrected by the white balance correcting section to prepare photograph data, and
a color correcting section which corrects the color of the photograph data.

**14.** The electronic equipment of any of claims 11 to 13,
wherein the color correcting section comprises:

means for adjusting the tone of each of the color components, and
means for conducting a correction taking into consideration relationships with other color components on each of the color components.

**15.** The electronic equipment of any of claims 11 to 14,
wherein the color correcting section corrects the color of the photograph data by use of the first color information.

**16.** The electronic equipment of any of claims 11 to 15,
wherein the host module further comprises a color specifying section that allows a user to specify second color information out of a plurality of predetermined color informations, and the color correcting section corrects the color of the data corrected by the white balance correcting section, by use of the first color information and/or the second color information.

**17.** The electronic equipment of any of claims 11 to 16,
wherein the host module further comprises a recording medium for storing the photograph data, and means for retrieving the photograph data stored in the recording medium and correcting the color of the retrieved photograph data again by the color correcting section.

**18.** The electronic equipment of claim 11, wherein the camera module further comprises a data compressing section which compresses the photograph data, and the host module further comprises a data decompressing section which decompresses the photograph data compressed by the data compressing section.

**19.** The electronic equipment of claim 18, wherein the white balance correcting section, the color interpolation processing section and the data compressing section are implemented by ASIC.

**20.** The electronic equipment of claim 17, wherein the color correcting section, the recorrecting means and the data decompressing section are implemented by use of a general-purpose processor and a computer program.

**21.** The electronic equipment of claim 12 or 13, wherein the color interpolation processing section and the color correcting section are implemented by use of a general-purpose processor and a computer program.

**22.** A method for correcting the color of image data output from an imaging device which outputs measured light into data representing a plurality of color components and outputs the data, the method comprising:

a step of acquiring first data by the imaging device and
acquiring first color information about the brightnesses of color components contained in the first data,
a white balance correcting step of acquiring second data by the imaging device and correcting the white balance of the second data by use of the first color information, and
a color correcting step of correcting the color of the second data whose white balance has been corrected.

**23.** The color correcting method of claim 22, wherein in the color correcting step, the tone of each of color components contained in the second data is adjusted, and a correction taking into consideration relationships with other color components is conducted on each of the color components.

**24.** The color correcting method of claim 22 or 23, further comprising a step of allowing a user to specify second color information out of a plurality of predetermined color informations,
wherein in the color correcting step, the degree of the color correction is determined by use of the first color information and/or the second color information.

**25.** The color correcting method of any of claims 21 to 24, wherein the second data is subjected to color interpolation processing prior to the color correcting step.

# FIG.1

IMAGING SECTION

WHITE BALANCE CORRECTING SECTION

COLOR INTERPOLATING SECTION

COLOR CORRECTING SECTION

INTRA-CHANNEL CORRECTION

INTER-CHANNEL CORRECTION

GAMMA CORRECTING SECTION

PHOTOGRAPH DATA STORAGE DEVICE

COLOR INFORMATION ANALYZING SECTION

COLOR SPECIFYING SECTION

EP 1 679 908 A1

FIG.2

# FIG.3

R → R CHANNEL TRC (25) → R'

G → G CHANNEL TRC (26) → G'

B → B CHANNEL TRC (27) → B'

$$\begin{pmatrix} c_{11} & c_{12} & c_{13} \\ c_{21} & c_{22} & c_{23} \\ c_{31} & c_{32} & c_{33} \end{pmatrix}$$ (28)

→ R"
→ G"
→ B"

COLOR CORRECTION CONTROL SECTION (24)

COLOR INFORMATION ANALYZING SECTION (4)

COLOR SPECIFICATION CONTROL SECTION (29)

INPUT SECTION (30)    DISPLAY SECTION (31)

(12)

(9)

EP 1 679 908 A1

## FIG.4a

```
          ┌──────────────────┐  S1
          │ START SETTING    │
          │ MODE             │
          └──────────────────┘
                   │
                   ▼
┌──────────────┐  S9      ┌──────────────────┐  S2
│ SPECIFY COLOR│          │ EXPOSURE         │
│ INFORMATION  │          └──────────────────┘
└──────────────┘                   │
       │                           ▼
       │          ┌──────────────────┐  S3
       └─────────▶│ ANALYZE COLOR    │
                  │ INFORMATION      │
         S9       └──────────────────┘
                           │
                           ▼
          ┌───────────────────────────┐  S4
          │ SET DEGREE OF WHITE       │
          │ BALANCE CORRECTION        │
          └───────────────────────────┘
                           │
                           ▼
          ┌───────────────────────────┐  S5
          │ SET COLOR CORRECTION      │
          │ PARAMETERS                │
          └───────────────────────────┘
```

## FIG.4b

```
          ┌───────────────────────────┐  S11
          │ START PHOTOGRAPHING       │
          │ MODE                      │
          └───────────────────────────┘
                           │
                           ▼
          ┌──────────────────┐  S12
          │ EXPOSURE         │
          └──────────────────┘
                           │
                           ▼
          ┌──────────────────┐  S13
          │ CORRECT WHITE    │
          │ BALANCE          │
          └──────────────────┘
                           │
                           ▼
          ┌───────────────────────────┐  S14
          │ PREPARE PHOTOGRAPH        │
          │ DATA                      │
          └───────────────────────────┘
                           │
                           ▼
          ┌──────────────────┐  S15
          │ CORRECT COLOR    │
          └──────────────────┘
                           │
                           ▼
          ┌──────────────────┐  S16
          │ PERFORM GAMMA    │
          │ CORRECTION       │
          └──────────────────┘
                           │
                           ▼
          ┌──────────────────┐  S17
          │ RECORD DATA      │
          └──────────────────┘
```

EP 1 679 908 A1

# FIG.5

EP 1 679 908 A1

# FIG.6

```
        ┌──────────────────────┐  S21
        │ START PHOTOGRAPH     │
        │ DISPLAY MODE         │
        └──────────────────────┘
                  │
                  ▼
        ┌──────────────────────┐  S22
        │ READ OUT             │
        │ PHOTOGRAPH DATA      │
        └──────────────────────┘
                  │
                  ▼
        ┌──────────────────────┐  S23
        │ DISPLAY PHOTOGRAPH   │
        │ DATA                 │
        └──────────────────────┘
                  │
                  ▼
        ┌──────────────────────┐  S24
        │ ACTIVATE COLOR       │
        │ RECORRECTING         │
        │ FUNCTION             │
        └──────────────────────┘
                  │
                  ▼
        ┌──────────────────────┐  S25
        │ SPECIFY COLOR        │
        │ INFORMATION          │
        └──────────────────────┘
                  │
                  ▼
        ┌──────────────────────┐  S26        S28
        │ CORRECT COLOR        │
        └──────────────────────┘
                  │
                  ▼
        ┌──────────────────────┐  S27
        │ PREVIEW DATA         │
        └──────────────────────┘
                  │
                  ▼
        ┌──────────────────────┐  S29
        │ STORE DATA           │
        └──────────────────────┘
```

FIG.7

FIG.8

EP 1 679 908 A1

# FIG.9a

START SETTING MODE — S41

ACTIVATE COLOR INFORMATION SPECIFYING FUNCTION — S50

EXPOSURE — S42

AE — S43

S44

SPECIFY COLOR INFORMATION

S51

ANALYZE COLOR INFORMATION — S45

SET DEGREE OF CORRECTION OF WHITE BALANCE — S46

SET PARAMETERS FOR COLOR CORRECTION — S49

# FIG.9b

START PHOTOGRAPHING MODE — S55

EXPOSURE — S56

CORRECT WHITE BALANCE — S57

PERFORM CFA INTERPOLATION PROCESSING ON DATA — S58

COMPRESS DATA — S59

SEND DATA — S60

RECEIVE DATA — S61

DECOMPRESS DATA — S62

CORRECT COLOR OF DATA — S63

PERFORM GAMMA CORRECTION ON DATA — S64

COMPRESS DATA — S65

STORE PHOTOGRAPH DATA — S66

EP 1 679 908 A1

# FIG.10

START PHOTOGRAPH DISPLAY MODE — S71

↓

READ OUT PHOTOGRAPH DATA — S72

↓

DISPLAY PHOTOGRAPH DATA — S73

↓

ACTIVATE COLOR RECORRECTING FUNCTION — S74

↓

SPECIFY COLOR INFORMATION — S75

↓

CORRECT COLOR — S76

↓

PREVIEW DATA — S77

S78

↓

STORE DATA — S79

FIG.11

EP 1 679 908 A1

**FIG.12**

## INTERNATIONAL SEARCH REPORT

| International application No. |
| --- |
| PCT/JP03/13659 |

**A. CLASSIFICATION OF SUBJECT MATTER**
Int.Cl$^7$  H04N9/73

According to International Patent Classification (IPC) or to both national classification and IPC

**B. FIELDS SEARCHED**

Minimum documentation searched (classification system followed by classification symbols)
Int.Cl$^7$  H04N9/73

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2003-299117 A  (Eastman Kodak Co.), 17 October, 2003 (17.10.03), | 1,3,6,9,10, 22,25 |
| Y | Par. Nos. [0013] to [0037]; Figs. 1 to 3 (Family: none) | 2,4,5,7,8, 11-21,23,24 |
| Y | JP 2000-175207 A  (Canon Inc.), 23 June, 2000 (23.06.00), Par. Nos. [0065] to [0072]; Fig. 21 (Family: none) | 2,14,18,19, 23 |
| Y | JP 2003-230161 A  (Nikon Corp.), 15 August, 2003 (15.08.03), Par. Nos. [0041] to [0050]; Fig. 10 (Family: none) | 4,7,16,24 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 January, 2004 (27.01.04) | 10 February, 2004 (10.02.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/13659 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-4445 A (Minolta Co., Ltd.), 07 January, 2000 (07.01.00), Par. No. [0075]; Fig. 7 (Family: none) | 5,17 |
| Y | JP 2002-290988 A (Nikon Corp.), 04 October, 2002 (04.10.02), Par. No. [0008]; Fig. 2 (Family: none) | 8,19 |
| Y | JP 2001-112021 A (Canon Inc.), 20 April, 2001 (20.04.01), Par. Nos. [0033] to [0055]; Figs. 1 to 3 (Family: none) | 11-21 |
| Y | JP 2003-209855 A (Fuji Photo Film Co., Ltd.), 25 July, 2003 (25.07.03), Par. Nos. [0022] to [0028]; Figs. 1 to 2 (Family: none) | 11-21 |

Form PCT/ISA/210 (continuation of second sheet) (July 1998)